# EUROPEAN PATENT APPLICATION

(11) **EP 1 604 806 A1**
(43) Date of publication of application: **14.12.2005**
(21) Application number: 04720976.2
(22) Date of filing: 16.03.2004
(51) Int. Cl.: B29C 65/16

(54) **KIT OF MATERIALS FOR LASER WELDING AND METHOD FOR LASER WELDING**

(30) Priority: 17.03.2003 JP 2003071286; 17.03.2003 JP 2003071287
(71) Applicant: Ube Industries, Ltd., Ube-shi, Yamaguchi-ken 755-8633 (JP)
(72) Inventor: KATAYAMA, Tsutomu, Ube Chemical Factory, Ube-shi, Yamaguchi 755-8633 (JP); FUKUI, Yasuharu, Ube Chemical Factory, Ube-shi, Yamaguchi 755-8633 (JP)
(74) Representative: Wössner, Gottfried
(86) International application number: PCT/JP2004/003461
(87) International publication number: WO 2004/082924

(57) **Abstract**

A material kit for laser welding, which is used for laser-welding a first resin member non-absorptive to laser light and a second resin member absorptive to laser light by overlapping the two resin members and irradiating laser light from the first resin member side, the material kit comprising a first resin material for forming a first resin member and a second resin material for forming a second resin member, wherein the first resin material comprises a first resin and a crystal nucleating agent or a resin having a crystallization accelerating effect on the first resin, and the second resin material comprises a second resin and an additive absorptive to laser light; and a laser welding method, for resin members, comprising using the kit.

## Description

### TECHNICAL FIELD

The present invention relates to a material kit, for laser welding, which is used for welding resin members by irradiating laser light and to a laser welding method.

### BACKGROUND ART

As for methods of joining resin materials with each other, a method using an adhesive and welding methods such as hot plate welding, vibration welding, ultrasonic welding and spin welding have been conventionally known. In recent years, an injection welding method such as DRI and DSI, and a laser welding method have also become known.

The joining method using an adhesive is a manual operation by a worker and this is an inefficient operation. Furthermore, this method is disadvantageous in that stable joining strength cannot be obtained and, depending on the kind of the resin member, a sufficiently high adhesive force may not be obtained. Also, environmental contamination is a problem with this method.

The hot plate welding has a problem that the cycle is long, a filling material is necessary, or welding cannot be attained in the water-absorbed state. The vibration welding is disadvantageous in that, for example, the welding part shifts 1 to 2 mm by the vibration, impairing suitability for precision components, a flash is generated to cause clogging of a filter or the like, or welding can be hardly attained when a warp exists. The ultrasonic welding has a drawback that, for example, the weld strength is low, the airtightness is poor, or the welding is applicable only to small members. The spin welding is applicable only to circular members and has problems that a filling material is necessary and welding cannot be attained in the water-absorbed state.

Also, DRI and DSI, which are injection welding methods recently employed for intake manifolds, have problems that, despite high weld strength, for example, the die is expensive, the molding machine need be modified, or these welding methods cannot be used unless the material has good flowability, in particular.

On the other hand, laser welding is a welding method of welding a resin member non-absorptive to laser light and a resin member absorptive to laser light by abutting these members against each other, where laser light is irradiated on the joining face from the non-absorptive resin member side, and the absorptive resin member forming the joining face is melted by the energy of laser light, thereby effecting joining (see, for example, Japanese Unexamined Patent Publication (Kokai) No. 60-214931 and Japanese Examined Patent Publication (Kokoku) No. 5-42336).

Accordingly, high joining strength should be obtained if the joining face between a resin member non-absorptive to laser light and a resin member absorptive to laser light is thoroughly heated and melted by satisfactorily absorbing the energy of laser light.

However, in practice, the joining strength is not satisfactorily elevated even when the dose of laser light irradiated is merely increased, but the excessively large dose of laser light irradiated rather causes a problem that the resin material is evaporated or deteriorated to decrease the joining strength.

The present invention has been made under these circumstances and an object of the present invention is to provide a material kit for laser welding, and a laser welding method, which can ensure firm joining between resin members in joining the resin members by a laser welding method.

### DISCLOSURE OF THE INVENTION

In order to attain the above-described object, the present inventors have made many studies on a joining method capable of firmly joining a first resin member and a second resin member by using laser light and, as a result, found that when a resin member comprising a first resin, into which a crystal nucleating agent or a resin having a crystallization accelerating effect on the first resin is incorporated, is used as the first resin member on the side where laser light is irradiated, both members can be firmly joined.

Thus, the present invention provides the following.
[1] A material kit for laser welding, which is used for laser-welding a first resin member non-absorptive to laser light and a second resin member absorptive to laser light by overlapping the two resin members and irradiating laser light from the first resin member side, the material kit comprising a first resin material for forming a first resin member and a second resin material for forming a second resin member, wherein the first resin material comprises a first resin and a crystal nucleating agent or a resin having a crystallization accelerating effect on the first resin, and the second resin material comprises a second resin and an additive absorptive to laser light.
[2] The material kit for laser welding as described in [1] above, wherein each of the first resin and the second resin is a polyamide.
[3] The material kit for laser welding as described in [1] above, wherein each of the first resin and the second resin is polyamide 11 and/or polyamide 12.
[4] The material kit for laser welding as described in any one of [1] to [3] above, wherein the content of the crystal nucleating agent is from 0.001 to 5 parts by weight per 100 parts by weight of the first resin.
[5] The material kit for laser welding as described in any one of [1] to [3] above, wherein the content of the resin having a crystallization accelerating effect on the first resin is from 1 to 20 parts by weight per 100 parts by weight of the first resin.
[6] The material kit for laser welding as described in any one of [1] to [4] above, wherein the crystal nucleating agent is talc.
[7] The material kit for laser welding as described in [3] above, wherein the resin having a crystallization accelerating effect on the first resin is polyamide 6 and/or polyamide 66.
[8] The material kit for laser welding as described in any one of [1] to [7] above, wherein the first resin member further comprises an additive weakly absorptive to laser light.
[9] A method for laser welding resin members, comprising overlapping a first resin member non-absorptive to laser light and a second resin member absorptive to laser light, and irradiating laser light from the first resin member side, thereby laser-welding the two resin members, wherein the first resin member comprises a first resin and a crystal nucleating agent or a resin having a crystallization accelerating effect on the first resin, and the second resin material comprises a second resin and an additive absorptive to laser light.
[10] The method for laser welding resin members as described in [9] above, wherein the first resin and the second resin each is a polyamide.
[11] The method for laser welding resin members as described in [9] above, wherein the first resin and the second resin each is polyamide 11 and/or polyamide 12.
[12] The method for laser welding resin members as described in any one of [9] to [11] above, wherein the crystal nucleating agent is talc.
[13] The method for laser welding resin members as described in [11] above, wherein the resin having a crystallization accelerating effect on the first resin is polyamide 6 and/or polyamide 66.
[14] An article comprising the resin members welded by the laser welding method described in any one of [9] to [13] above.

The mechanism of laser welding is such that when laser light is irradiated on the joining face between a first resin member non-absorptive to laser light and a second resin member absorptive to laser light, the second member forming the joining face and having absorptivity is melted by the energy of laser light and, at the same time, heat is transmitted to the first resin member and, as a result, the first resin member is also melted. At this time, a pressure due to cubical expansion (volumetric expansion) resulting from melting is added, whereby the joining strength at the junction part is elevated.

In the present invention, the first resin member comprises a first resin into which a crystal nucleating agent or a resin having a crystallization accelerating effect on the first resin is incorporated and, therefore, the crystallization initiating temperature is high. For this reason, crystallization of the first resin starts on the joining face at the time when a high pressure is added due to cubical expansion resulting from melting, and this provides a state that the resin members are thoroughly intertwined with each other in the junction part, whereby the joining strength is remarkably enhanced.

### BRIEF DESCRIPTION OF THE DRAWINGS

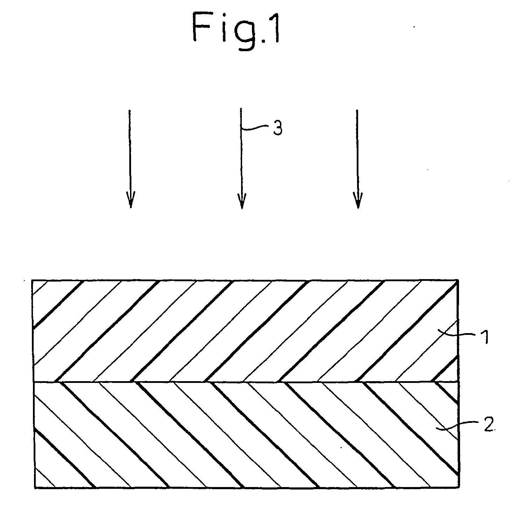

Fig. 1 schematically shows the state where a first resin member non-absorptive to laser light and a second resin member absorptive to laser light are laser-welded according to the present invention.

### MODE FOR CARRYING OUT THE INVENTION

In the laser welding method of the present invention, a first resin member non-absorptive to laser light and a second resin member absorptive to laser light are laser-welded.

The first resin member comprises a first resin and a crystal nucleating agent or a resin having a crystallization accelerating effect on the first resin.

As for the first resin constituting the first resin member, any kind of resin may be used as long as it is a resin not exhibiting substantial absorptivity to laser light. Examples thereof include a polyamide, a polypropylene, and a styrene-acrylonitrile copolymer. If desired, a reinforcing fiber such as glass fiber or carbon fiber may be added to the resin used.

The "substantial absorptivity" as used herein means absorptivity such that the portion which has received laser light absorbs laser light and melts. Accordingly, the term "not exhibiting substantial absorptivity" means absorptivity such that, for example, even if slight absorption of laser light occurs, the portion transmits the majority of laser light and the resin in that portion is not melted.

Examples of the polyamide used as the first resin include those comprising a diamine and a dibasic acid, comprising a lactam or an aminocarboxylic acid, or comprising a copolymer of two or more thereof.

Examples of the diamine include an aliphatic diamine such as tetramethylenediamine, hexamethylenediamine, octamethylenediamine, nonamethylenediamine, undecamethylenediamine and dodecamethylenediamine, and a diamine having an aromatic or cyclic structure, such as meta-xylylenediamine.

Examples of the dicarboxylic acid include an aliphatic diamine such as adipic acid, heptanedicarboxylic acid, octanedicarboxylic acid, nonanedicarboxylic acid, undecanedicarboxylic acid and dodecanedicarboxylic acid, and a dicarboxylic acid having an aromatic or cyclic structure, such as terephthalic acid and isophthalic acid.

The lactam is a lactam having from 6 to 12 carbon atoms, and the aminocarboxylic acid is an aminocarboxylic acid having from 6 to 12 carbon atoms. Examples thereof include 6-aminocaproic acid, 7-aminoheptanoic acid, 11-aminoundecanoic acid, 12-aminododecanoic acid, α-pyrrolidone, ε-caprolactam, ω-laurolactam and ε-enantolactam.

Specific examples of the polyamide used as the first resin include polyamide 6, polyamide 11, polyamide 12, polyamide 610, polyamide 612 and polyamide 6166. Among these, polyamide 11 and polyamide 12 are preferred.

The crystal nucleating agent incorporated into the first resin is not particularly limited as long as it has an effect of increasing the crystallization rate of resin, but examples thereof include an inorganic crystal agent such as graphite, molybdenum disulfide, barium sulfate, calcium carbonate, sodium phosphate, talc, mica and kaolin, and an organic crystal nucleating agent such as aliphatic acid metal salts comprising a fatty acid (e.g., myristic acid, palmitic acid, stearic acid, oleic acid, behenic acid) and a metal (e.g., zinc, magnesium, calcium, lithium, aluminum, barium), higher fatty acids, higher fatty acid esters and higher aliphatic alcohols.

The content of the crystal nucleating agent is preferably from 0.001 to 5 parts by weight, more preferably from 0.002 to 1 part by weight, per 100 parts by weight of the first resin. If the content of the crystal nucleating agent is less than 0.001 part by weight per 100 parts by weight of the first resin, the effect of elevating the crystallization initiating temperature of the first resin cannot be obtained and the joining strength in the junction part is not enhanced, whereas if the content of the crystal nucleating agent exceeds 5 parts by weight per 100 parts by weight of the first resin, the base material undergoes great change in its physical properties such as rigidity, impact resistance and flowability, and this is not preferred.

The resin having a crystallization accelerating effect on the first resin, which is incorporated into the first resin, is not particularly limited as long as it has an effect of increasing the crystallization rate of the first resin, and may be, generally, a resin having a solidification point (Tc) higher than the solidification point (Tc) of the first resin. For example, when the first resin is polyamide 11 and/or polyamide 12, examples of the resin having such an effect include polyamide 6 and polyamide 66.

The content of the resin having a crystallization accelerating effect on the first resin is preferably from 1 to 20 parts by weight, more preferably from 5 to 15 parts by weight, per 100 parts by weight of the first resin member. If the content of the resin having a crystallization accelerating effect on the first resin is less than 1 part by weight per 100 parts by weight of the first resin member, the effect of elevating the crystallization initiating temperature of the first resin cannot be obtained and the joining strength in the junction part is not enhanced, whereas if the content of the resin having a crystallization accelerating effect exceeds 20 parts by weight per 100 parts by weight of the first resin member, the base material undergoes great change in its physical properties such as resistance, impact resistance and flowability, and this is not preferred.

The first resin member preferably further contains an additive weakly absorptive to laser light.

The additive weakly absorptive to laser light contained in the first resin member may be sufficient if it is a material of partially absorbing laser light and partially transmitting laser light by resonating at the wavelength of laser light. In particular, a material having a transmittance of 40 to 90% for laser light is preferred. This transmittance for laser light is a numerical value obtained when the weakly absorptive additive is shaped into an ASTM No. 1 dumbbell and measured.

The content of the additive weakly absorptive to laser light, which is contained in the first resin member, is preferably from 0.1 to 5 wt% based on the first resin member. If the content of the weakly absorptive additive is less than 0.1 wt%, heat resulting from absorbing the energy of laser light is hardly generated and fails to satisfactorily elevate the temperature of the first resin member and the joining strength in the junction part decreases, whereas if the content of the weakly absorptive additive exceeds 5 wt%, this is disadvantageous in that the physical properties such as bending modulus decreases or a large amount of laser light energy is necessary for obtaining a sufficiently high weld strength.

Examples of the additive weakly absorptive to laser light include a copolymer of an ethylene and another olefin or a vinyl-based compound (hereinafter, this copolymer is referred to as an "ethylene-based copolymer"), a block copolymer obtained by hydrogenating a copolymer of a styrene and a conjugated diene compound (hereinafter, this copolymer is referred to as a "styrene-based copolymer"), and a modified ethylene-based copolymer or modified styrene-based copolymer obtained by adding an α,β-unsaturated carboxylic acid or a derivative thereof to such an ethylene-based copolymer or styrene-based copolymer.

Examples of the ethylene-based copolymer include an ethylene/α-olefin-based copolymer, an ethylene/α,β-unsaturated carboxylic acid copolymer, an ethylene/α,β-unsaturated carboxylic acid ester-based copolymer, and an ionomer.

The ethylene/α-olefin-based copolymer is a polymer obtained by copolymerizing an ethylene and an α-olefin having 3 or more carbon atoms, and examples of the α-olefin having 3 or more carbon atoms include propylene, butene-1, hexene-1, decene-1, 4-methylbutene-1 and 4-methylpentene-1.

The ethylene/α,β-unsaturated carboxylic acid-based copolymer is a polymer obtained by copolymerizing ethylene and an α,β-unsaturated carboxylic acid monomer, and examples of the α,β-unsaturated carboxylic acid monomer include an acrylic acid, a methacrylic acid, an ethacrylic acid and a maleic anhydride.

The ethylene/α,β-unsaturated carboxylic acid ester-based copolymer is a polymer obtained by copolymerizing an ethylene and an α,β-unsaturated carboxylic acid ester monomer, and examples of the α,β-unsaturated carboxylic acid ester monomer include an acrylic acid ester such as methyl acrylate, ethyl acrylate, propyl acrylate and butyl acrylate, and a methacrylic acid ester such as methyl methacrylate, ethyl methacrylate, propyl methacrylate and butyl methacrylate.

The ionomer is a copolymer of an olefin and an α,β-unsaturated carboxylic acid, where at least a part of the carboxyl group is ionized by the neutralization of metal ion. The olefin is preferably an ethylene, and the α,β-unsaturated carboxylic acid is preferably an acrylic acid, a methacrylic acid or the like. Examples of the metal ion include an ion such as sodium, potassium, magnesium, calcium and zinc.

The styrene-based copolymer is a block copolymer obtained by hydrogenating a block copolymer consisting of at least one, preferably two or more, polymer block A mainly comprising styrene, and at least one polymer block B mainly comprising a conjugated diene compound, and this copolymer has a structure such as A-B-A, B-A-B-A, A-B-A-B-A or B-A-B-A-B.

Examples of the conjugated diene compound include butadiene, isoprene, 1,3-pentadiene and 2,3-dimethyl-1,3-butadiene.

Examples of the styrene-based copolymer include a hydrogenated styrene-butadiene-styrene copolymer (SEBS) and a hydrogenated styrene-isoprene-styrene copolymer (SEPS).

The modified ethylene-based copolymer and the modified styrene-based copolymer can be obtained by adding a compound containing an α,β-unsaturated carboxylic acid group or its derivative group, which is in the solution state or melted state, to the ethylene-based copolymer or styrene-based copolymer specified above. Examples of the method for producing these modified ethylene-based copolymer and modified styrene-based copolymer include a method of reacting a compound containing a carboxylic acid group or its derivative group with an ethylene-based copolymer or styrene-based copolymer in the presence of a radical initiator in an extruder.

Examples of the α,β-unsaturated carboxylic acid or a derivative thereof (hereinafter simply referred to as an "unsaturated carboxylic acid") include an acrylic acid, a methacrylic acid, an ethacrylic acid, a malic acid, a fumaric acid and an anhydride or ester of these acids.

In the first resin, a colorant non-absorptive to laser light may be added. Examples of the colorant include an organic dye such as anthraquinone-based dye, perylene-based dye, perynone-based dye, heterocyclic dye, disazo-based dye and monoazo-based dye. Some of these dyes may be mixed and used.

Furthermore, in the first resin, an inorganic or organic filler and a functionality-imparting agent such as heat-resisting agent, weatherproofing agent, releasing agent, lubricant, antistatic agent, flame retardant and flame retardant aid, may be added.

The second resin member comprises a second resin and an additive absorptive to laser light, which is dispersed in the second resin.

As for the second resin constituting the second resin member, any kind of resin may be used as long as it exhibits substantial absorptivity to laser light at least when an additive absorptive to laser light is contained. Examples thereof include a resin such as polyamide, polypropylene and styrene-acrylonitrile copolymer, and a resin obtained by reinforcing the above-described resin with a glass fiber or a carbon fiber.

Specifically, by taking account of the adhesive property to the first resin, the same kind of resin as the first resin is preferably used.

The additive having absorptivity to laser light used in the second resin member may be an inorganic colorant such as carbon black and composite oxide-based pigment, or an organic colorant such as phthalocyanine-based pigment and polymethine-based pigment.

In this way, the second resin member has substantial absorptivity to laser light and, therefore, when laser light is irradiated, absorbs the laser light and melts. That is, in the laser welding method of the present invention, the second resin member absorbs the laser light transmitted through the first resin member, as a result, the second resin member itself and the abutting first resin member are melted to effect joining.

Other than these components, for example, an inorganic or organic filler and a functionality-imparting agent such as heat-resisting agent, weatherproofing agent, releasing agent, lubricant, antistatic agent, flame retardant and flame retardant aid, may be added.

The second resin member preferably has a transmittance of 5% or less for the laser light irradiated. If the transmittance exceeds 5%, the irradiated laser light is transmitted, as a result, not only the energy of laser light is less absorbed to the second resin member but also there arises a loss in the energy of laser light.

In the laser welding method of the present invention, the above-described first resin member and second resin member are overlapped and laser light is irradiated on the overlapped area from the first resin member side, whereby the two resin members are laser-welded.

Fig. 1 schematically shows the state of laser-welding a first resin member 1 and a second resin member 2 by overlapping the two resin members and irradiating laser light 3 on the overlapped area from the first resin member side.

By irradiating laser light from the first resin member side, the laser light is transmitted through the first resin part non-absorptive to laser light. The transmitted laser light reaches the second resin member surface and is accumulated as energy. The accumulated energy distribution is a non-uniform energy distribution due to scattering on passing through the first resin member, with respect to the energy distribution that the laser light originally possessed. On the joining face, heating and melting with a non-uniform energy distribution occur, as a result, a junction part in the state of the first resin member and the second resin member being intertwined with each other is produced and a joined body with a firm junction part is obtained.

Furthermore, when the first resin member and the second resin member are colored with a colorant of the same color, resins having the same color can be joined with each other and the joined resin member can have a good appearance.

Examples of the laser light used for laser welding include laser rays of a glass:neodymium³⁺ laser, a YAG:neodymium³⁺ laser, a ruby laser, a helium-neon laser, a krypton laser, an argon laser, an H₂ laser, an N₂ laser and a semiconductor laser. Among these lasers, a semiconductor laser is preferred.

The wavelength of laser light varies depending on the resin materials to be joined and cannot be easily determined but is preferably 400 nm or more. If the wavelength is shorter than 400 nm, serious deterioration of the resin occurs.

The output of laser light can be adjusted by the scanning rate and the absorption capacity of the first resin member. If the output of laser light is low, joining faces of resin materials can be hardly melted with each other, whereas if the output is high, this causes a problem that the resin material is evaporated or decomposed to decrease the strength.

### EXAMPLES

The present invention is described below by referring to Examples.

### Examples 1 to 3 and Comparative Example 1:

A resin composition obtained by kneading polyamide 12 (3020B, produced by Ube Industries, Ltd.) and a talc powder (TALC-CUP, trade name, produced by Fuji Talc K.K.) at a ratio shown in Table 1 was shaped into an ASTM No. 1 dumbbell to produce a first resin member.

The crystallization initiating temperature of the resin composition obtained was measured with use of a DSC apparatus (Model: DSC-7) manufactured by Perkin-Elmer by holding the resin composition at 250°C for 10 minutes in a nitrogen gas atmosphere and then lowering the temperature at 5°C/min.

A resin composition obtained by blending 0.3 wt% of carbon black with polyamide 12 (3020 B, produced by Ube Industries, Ltd.) was shaped into an ASTM No. 1 dumbbell to produce a second resin member.

Subsequently, the first resin member and the second resin member were overlapped at respective end parts and in this state, set in a semiconductor laser apparatus, and the two resin members were welded by irradiating laser light from the first resin member side.

At this time, the laser light used for laser welding was at a wavelength of 940 nm and was irradiated at the irradiation dose shown in Table 1. The tensile strength of the resulting welded members was measured according to ASTM D638 and the results are shown in Table 1.

### Examples 4 and 5:

A laser welding test was performed in the same manner as in Example 1 except that zinc stearate (Zinc-Stearate, trade name, produced by NOF Corporation) (Example 4) or magnesium stearate (Magnesium-Stearate, trade name, produced by NOF Corporation) (Example 5) at a ratio shown in Table 1 was used as the crystal nucleating agent in place of talc. The results are shown in Table 1.

**Table 1**

| | | Comparative Example | Example | | | | |
|---|---|---|---|---|---|---|---|
| | | 1 | 1 | 2 | 3 | 4 | 5 |
| First resin member | PA12 (wt%) | 100 | 100 | 100 | 100 | 100 | 100 |
| | Crystal nucleating agent (ppm) | 0 | 50 | 200 | 500 | 1000 | 1000 |
| | Kind | - | talc | talc | talc | Zn stearate | Mg stearate |
| Crystallization initiating temperature (°C) | | 156 | 160 | 161 | 162 | 158 | 158 |
| Irradiation dose of laser light (J/mm) | | 1.01 | 3.39 | 3.39 | 3.39 | 0.66 | 1.01 |
| Tensile strength (N) | | 338 | 737 | 700 | 685 | 380 | 463 |

### Examples 6 to 8:

A resin composition obtained by kneading polyamide 12 (3020B, produced by Ube Industries, Ltd.) and polyamide 6 (1011FB, Ube Industries, Ltd.) at a ratio shown in Table 2 was shaped into an ASTM No. 1 dumbbell to produce a first resin member.

The crystallization initiating temperature of the resin composition obtained was measured with use of a DSC apparatus (Model: DSC-7) manufactured by Perkin-Elmer by holding the resin composition at 250°C for 10 minutes in a nitrogen gas atmosphere and then lowering the temperature at 5°C/min.

A resin composition obtained by blending 0.3 wt% of carbon black with polyamide 12 (3020 B, produced by Ube Industries, Ltd.) was shaped into an ASTM No. 1 dumbbell to produce a second resin member.

Subsequently, the first resin member and the second resin member were overlapped at respective end parts and in this state, set in a semiconductor laser apparatus, and the two resin members were welded by irradiating laser light from the first resin member side.

At this time, the laser light used for laser welding was at a wavelength of 940 nm and was irradiated at the irradiation dose shown in Table 2. The tensile strength of the resulting welded members was measured according to ASTM D638 and the results are shown in Table 2. For the purpose of comparison, the results of Comparative Example 1 are also shown in Table 2.

**Table 2**

| | | Comparative Example 1 | Example 6 | Example 7 | Example 8 |
|---|---|---|---|---|---|
| First resin member | Kind | PA12 | PA12 | PA12 | PA12 |
| | (wt%) | 100 | 95 | 90 | 85 |
| | Kind | - | PA6 | PA6 | PA6 |
| | (wt%) | 0 | 5 | 10 | 15 |
| Crystallization initiating temperature (°C) | | 156 | 159 | 160 | 160 |
| Irradiation dose of laser light (J/mm) | | 1.01 | 1.01 | 3.39 | 3.39 |
| Tensile strength (N) | | 338 | 408 | 548 | 685 |

### INDUSTRIAL APPLICABILITY

In the present invention, the first resin member, as a transmitting material, comprises a first resin into which a crystal nucleating agent or a resin having a crystallization accelerating effect on the first resin is incorporated, and therefore, the crystallization initiating temperature is made higher. By virtue of this, crystallization of the first resin starts on the joining face at the time when a high pressure is added due to cubical expansion resulting from melting of the resin by utilizing the energy of laser light, and this provides a state that the resin members are thoroughly intertwined with each other in the junction part, whereby the joining strength is remarkably enhanced.

## Claims

1. A material kit for laser welding, which is used for laser-welding a first resin member non-absorptive to laser light and a second resin member absorptive to laser light by overlapping said two resin members and irradiating laser light from said first resin member side, the material kit comprising a first resin material for forming a first resin member and a second resin material for forming a second resin member, wherein the first resin material comprises a first resin and a crystal nucleating agent or a resin having a crystallization accelerating effect on the first resin, and the second resin material comprises a second resin and an additive absorptive to laser light.

2. The material kit for laser welding as claimed in claim 1, wherein each of the first resin and the second resin is a polyamide.

3. The material kit for laser welding as claimed in claim 1, wherein each of the first resin and the second resin is polyamide 11 and/or polyamide 12.

4. The material kit for laser welding as claimed in any one of claims 1 to 3, wherein the content of the crystal nucleating agent is from 0.001 to 5 parts by weight per 100 parts by weight of the first resin.

5. The material kit for laser welding as claimed in any one of claims 1 to 3, wherein the content of the resin having a crystallization accelerating effect on the first resin is from 1 to 20 parts by weight per 100 parts by weight of the first resin.

6. The material kit for laser welding as claimed in any one of claims 1 to 4, wherein the crystal nucleating agent is talc.

7. The material kit for laser welding as claimed in claim 3, wherein the resin having a crystallization accelerating effect on the first resin is polyamide 6 and/or polyamide 66.

8. The material kit for laser welding as claimed in any one of claims 1 to 7, wherein the first resin member further comprises an additive weakly absorptive to laser light.

9. A method for laser welding resin members, comprising overlapping a first resin member non-absorptive to laser light and a second resin member absorptive to laser light, and irradiating laser light from said first resin member side, thereby laser-welding said two resin members, wherein the first resin member comprises a first resin and a crystal nucleating agent or a resin having a crystallization accelerating effect on the first resin, and the second resin material comprises a second resin and an additive absorptive to laser light.

10. The method for laser welding resin members as claimed in claim 9, wherein the first resin and the second resin each is a polyamide.

11. The method for laser welding resin members as claimed in claim 9, wherein the first resin and the second resin each is polyamide 11 and/or polyamide 12.

12. The method for laser welding resin members as claimed in any one of claims 9 to 11, wherein the crystal nucleating agent is talc.

13. The method for laser welding resin members as claimed in claim 11, wherein the resin having a crystallization accelerating effect on the first resin is polyamide 6 and/or polyamide 66.

14. An article comprising the resin members welded by the laser welding method claimed in any one of claims 9 to 13.
